# EUROPÄISCHE PATENTSCHRIFT

(11) **EP 1 158 225 B1**
(45) Veröffentlichungstag und Bekanntmachung des Hinweises auf die Patenterteilung: **31.08.2005**
(21) Anmeldenummer: 01110896.6
(22) Anmeldetag: 05.05.2001
(51) Int. Cl.: F16J 15/08, F16J 15/06

(54) **Flachdichtung**
Flat gasket
Joint plat d'étanchéité

(30) Priorität: 23.05.2000 DE 10025400; 04.08.2000 DE 10037964
(43) Veröffentlichungstag der Anmeldung: 28.11.2001
(73) Patentinhaber: ElringKlinger AG, 72581 Dettingen (DE)
(72) Erfinder: Hegmann, Oliver, 65462 Ginsheim (DE)
(74) Vertreter: Hoeger, Stellrecht & Partner Patentanwälte

(56) Entgegenhaltungen:
- EP-A- 0 646 714
- EP-A- 0 872 671
- EP-A- 0 992 718
- DE-A- 19 534 962

## Beschreibung

Die Erfindung betrifft eine Flachdichtung zur Abdichtung eines Dichtspalts zwischen gegen die Flachdichtung anpreßbaren Dichtflächen von Maschinenbauteilen, wobei die Flachdichtung eine Dichtungsplatte aufweist, welche mindestens zwei aufeinander angeordnete Metallblechlagen umfaßt.

Bei derartigen Flachdichtungen versieht man die die beiden Hauptoberflächen der Dichtungsplatte bildenden Metallblechlagen üblicherweise dort mit Sicken, wo an bezüglich der Abdichtfunktion besonders kritischen Stellen eine erhöhte Dichtflächenpressung zwischen der Flachdichtung und den Dichtflächen der gegeneinander abzudichtenden Maschinenbauteile erzeugt werden soll. Derartige Sicken haben sich jedoch dort als nicht ausreichend erwiesen, wo die Maschinenbauteil-Dichtflächen, zwischen denen die Flachdichtung eingespannt wird, uneben sind, beispielsweise Stufen aufweisen, wie dies dann der Fall ist, wenn es sich bei einer gegen die Flachdichtung anliegenden Maschinenbauteil-Dichtfläche um mehrere, beispielsweise zwei Dichtflächenbereiche handelt, welche von mehreren gesonderten Maschinenbauteilen gebildet werden, die im Bereich dieser Stufe gegeneinander anliegen, d. h. eine Stoßstelle bilden - an solchen Stoßstellen können Fertigungs-und/oder Montagetoleranzen zu einer Stufe in der besagten Dichtfläche führen.

Typisch für diese Problematik sind Flachdichtungen in Form von Zylinderkopfdichtungen für Hubkolben-Verbrennungsmotoren mit einem insbesondere mehrteiligen Kettenkasten, welcher gleichfalls durch die Zylinderkopfdichtung abgedichtet werden soll, da in diesem Fall die beiden Maschinenbauteil-Dichtflächen, zwischen denen die Zylinderkopfdichtung eingespannt wird, gebildet werden einerseits vom Zylinderkopf und einem Kettenkasten-Oberteil und andererseits vom Motorblock bzw. Kurbelgehäuse und einem Kettenkasten-Unterteil - bei einer solchen Motorkonstruktion ergibt sich sowohl eine Stoßstelle zwischen dem Zylinderkopf und dem Kettenkasten-Oberteil, als auch eine Stoßstelle zwischen dem Motorblock und dem Kettenkasten-Unterteil.

Aus dem Stand der Technik ergeben sich bereits mehrere Lösungen für das vorstehend geschilderte, durch Stoßstellen hervorgerufene Problem:
So offenbart die EP-A-0 059 777 eine einlagige, metallische Flachdichtung für ein mehrteiliges Getriebegehäuse mit einem Gehäuseoberteil und einem Gehäuseunterteil, zwischen denen die Flachdichtung eingespannt wird. Das Gehäuseoberteil ist seinerseits mehrteilig, so daß sich in der gegen die Flachdichtung anzupressenden Dichtfläche des Gehäuseoberteils Stoßstellen ergeben, welche in einem Bereich der Dichtfläche zu Stufen führen können. Die Flachdichtung besitzt deshalb eine langgestreckte, schlitzförmige Öffnung, welche sich bei eingebauter Dichtung über alle diese Stoßstellen erstreckt und in die ein strangförmiges, elastomeres Dichtelement eingelegt ist, das beidseits über die beiden Hauptoberflächen der Flachdichtung übersteht und als vorgefertigter Einsatz hergestellt wird.

Dem Stand der Technik sind auch Lösungen des vorstehend beschriebenen Problems für Zylinderkopfdichtungen zu entnehmen, welche auch der Abdichtung eines Kettenkastens dienen:

So zeigt die DE-C-43 37 758 eine mehrlagige metallische Zylinderkopfdichtung, in die vorgefertigte elastomere Dichtelemente eingesetzt sind, und zwar an Stellen der Zylinderkopfdichtung, welche jeweils über einer Stoßstelle zwischen Motorblock und Kettenkasten liegen. Bei einer ersten, vierlagigen Ausführungsform dieser Zylinderkopfdichtung hat jedes der Dichtelemente einen ungefähr T-förmigen Querschnitt mit einem Abdichtteil und einem gegenüber diesem verdickten Kopfteil, welcher der Festlegung des Dichtelements in der Zylinderkopfdichtung dient; zu diesem Zweck haben die beiden Mittellagen für jedes Dichtelement übereinanderliegende rechteckige, fensterartige Öffnungen zur Aufnahme des Kopfteils des betreffenden Dichtelements, während die eine Deck-oder Außenlage im Bereich der Dichtelemente geschlossen ist und die andere Decklage für jedes Dichtelement eine rechteckige fensterartige Öffnung besitzt, durch die der Abdichtteil des Dichtelements hindurchgreift und die kleiner ist als die Öffnungen der Mittellagen und der Querschnitt des Kopfteils. Schon bei ungepreßter Zylinderkopfdichtung ragen die Abdichtteile der Dichtelemente über die mit den Öffnungen versehene Decklage beträchtlich hinaus. Bei einer zweiten Ausführungsform dieser bekannten Zylinderkopfdichtung, welche dreilagig ist, haben alle drei Lagen an den Stellen der Dichtelemente übereinanderliegende rechteckige, fensterartige Öffnungen, wobei die Öffnungen der Mittellage etwas größer sind als die untereinander gleich großen Öffnungen der Decklagen, so daß sich die Dichtelemente mit im Durchmesser vergrößerten mittleren Bereichen zwischen den Decklagen gegen Verschiebungen gesichert halten lassen. Auch bei dieser zweiten Ausführungsform stehen die Dichtelemente schon bei ungepreßter Zylinderkopfdichtung über die eine Hauptoberfläche der Dichtung hinaus.

Schließlich geht aus der EP-B-0 701 051 eine mehrlagige metallische Zylinderkopfdichtung hervor, welche auch der Abdichtung eines Kettenkastens dient. Die Dichtungsplatte dieser Zylinderkopfdichtung besitzt eine verhältnismäßig dicke Mittellage und zwei verhältnismäßig dünne Außenlagen, welche jeweils mit einer sogenannten Halbsicke versehen sind, die sich um die Kettenkastenöffnung als in sich geschlossene Sickenlinie herumerstreckt (im Gegensatz zu im Querschnitt ungefähr U-förmigen Vollsicken hat eine Halbsicke einen Querschnitt, welcher einer mehr oder minder flachgezogenen Stufe oder Z entspricht). Neben jeder der beiden Schmalseiten der Kettenkastenöffnung besitzt die Mittellage jeweils eine Aussparung in Form eines langgestreckten rechteckigen Fensters, welche parallel zu der benachbarten Schmalseite der Kettenkastenöffnung verläuft, sowie ein vorgefertigtes, strangförmiges elastomeres Dichtelement, welches mit Spiel in das betreffende Fenster eingelegt ist und beidseitig über die beiden Hauptoberflächen der Mittellage übersteht (und zwar schon bei noch nicht eingebauter, d. h. ungepreßter Zylinderkopfdichtung). Die eine der Außenlagen ist über den Dichtelementen geschlossen, d. h. durchgehend, während die andere Außenlage ein großes, ungefähr rechteckiges Fenster besitzt, welches größer ist als die Kettenkastenöffnung und die beiden Dichtelemente freigibt, d. h. in einer Draufsicht auf die Zylinderkopfdichtung liegen die beiden Dichtelemente innerhalb dieses Fensters. Wie bei dieser bekannten Zylinderkopfdichtung die beiden Dichtelemente daran gehindert werden sollen, beim Handhaben der Dichtung aus dieser herauszufallen, läßt sich der EP-B-0 701 051 nicht entnehmen; außerdem vermag diese bekannte Zylinderkopfdichtung das eingangs geschilderte Problem dann nur zum Teil lösen, wenn in den gegen die Zylinderkopfdichtung anzupressenden Maschinenbauteil-Dichtflächen beidseits der Zylinderkopfdichtung Stoßstellen vorhanden sind, weil der Kettenkasten aus einem Kettenkasten-Oberteil und einem Kettenkasten-Unterteil zusammengesetzt ist; außerdem kann, wie sich aus dem folgenden noch ergeben wird, diese bekannte Dichtung auch dann zu Problemen führen, wenn auf der Seite der mit den Fenstern versehenen Außenlage ein Kettenkastenteil vorhanden ist, welches bei seiner Montage von der Seite her eingeschoben wird.

Bei der Montage von Motoren mit einem aus einem Oberteil und einem Unterteil zusammengesetzten Kettenkasten ist schon versucht worden, das eingangs geschilderte Problem dadurch zu lösen, daß man die Zylinderkopfdichtung zu beiden Seiten der Kettenkastenöffnung jeweils mit einem verhältnismäßig kleinen, ovalen Loch versieht, welches durch alle Lagen der mehrlagigen metallischen Zylinderkopfdichtung hindurchgeht und in das im Zuge der Motormontage ein zunächst zähflüssiges Dichtmittel eingespritzt wird, welches bei erhöhten Temperaturen zu einem elastomeren Material ausgehärtet werden kann, also beispielsweise bei der ersten Inbetriebnahme des Motors. Es liegt aber auf der Hand, daß eine solche Vorgehensweise bei der Motormontage in einer Serienfertigung unbefriedigend ist, und zwar aus mehreren Gründen: Fahrzeughersteller tendieren heutzutage dazu, möglichst viele Arbeitsschritte auf ihre Zulieferer zu verlagern, und in der Serienfertigung ist es auch schwierig, zumindest aber zeitraubend, stets die für eine zuverlässige Abdichtung erforderliche Dichtmittelmenge in die besagten Löcher einzuspritzen.

Ferner besteht bezüglich der in Rede stehenden Flachdichtungen häufig noch ein weiteres Problem, welches sich anhand eines Motors mit einem mehrteiligen Kettenkasten gut illustrieren läßt: Ist beispielsweise das Kettenkasten-Oberteil parallel zur Ebene des durch die Zylinderkopfdichtung abzudichtenden Dichtspalts geführt, besteht bei der Montage des Kettenkasten-Oberteils das Risiko, daß ein über die Oberflächenkontur der Dichtungsplatte überstehendes elastomeres Dichtelement abgeschert wird. Entsprechendes gilt für ein parallel zur Dichtspaltebene geführtes Kettenkasten-Unterteil oder für Konstruktionen mit nur einem separaten Kettenkastenteil, welches parallel zur Dichtspaltebene geführt ist.

Aus der DE-A-195 34 962 ergibt sich eine Zylinderkopfdichtung für einen Motor, bei dem an den Motorblock ein Kettenkasten angrenzt, wobei die Fuge zwischen diesen beiden Motorbauteilen durch eine Flachdichtung abgedichtet wird. Die Zylinderkopfdichtung hat eine aus mehreren aufeinandergeschichteten Metallblechlagen aufgebaute Dichtungsplatte mit einer oberen, bei eingebauter Dichtung dem Zylinderkopf zugewandten Decklage und einer unteren Decklage, welche über dem Spalt zwischen Motorblock und Kettenkasten eine Austrittsöffnung für eine plastische pastöse Dichtmasse aufweist, bei der es sich um eine Polyurethan-Mischung handeln soll, die mindestens bis zu einer Temperatur von 200°C plastisch ist. Über dieser Austrittsöffnung ist im Innern der Dichtungsplatteein Hohlraum ausgebildet, welcher ein Reservoir für die Dichtmasse bildet und oben durch eine Auswölbung der oberen Decklage begrenzt wird. Beim Einbau dieser bekannten Zylinderkopfdichtung, d. h. wenn letztere gepreßt wird, tritt die Dichtmasse infolge einer Abflachung dieser Auswölbung durch die Austrittsöffnung der unteren Decklage hindurch nach unten aus der Dichtungsplatte aus. Diese bekannte Zylinderkopfdichtung eignet sich also nur zur Abdichtung einer Unstetigkeit in den Motorbauteil-Dichtflächen auf der einen Seite der Dichtung; außerdem wird als Dichtmasse in der DE-A-195 34 962 nur die erwähnte Polyurethan-Mischung angegeben, von der anzunehmen ist, daß sie auch im Motorbetrieb pastös und plastisch bleibt - Polyurethan-Mischungen härten ohne Zusatz eines Vernetzers nicht aus, und von einem solchen ist in der DE-A-195 34 962 nicht die Rede.

Der Erfindung lag die Aufgabe zugrunde, eine Flachdichtung, wie sie sich aus der DE-A-195 34 962 ergibt, d. h. eine Flachdichtung gemäß dem Oberbegriff des Anspruchs 1 bzw. des Anspruchs 2, zu schaffen, mit der sich ein zwischen Maschinenbauteil-Dichtflächen liegender Dichtspalt auch dann zuverlässig abdichten läßt, wenn die Maschinenbauteil-Dichtflächen beidseits des durch die Flachdichtung abzudichtenden Dichtspalts so gestaltet sind, daß sie an der montierten Flachdichtung zu einer räumlich unterschiedlichen Dichtflächenpressung führen; durch die zu schaffende Flachdichtung soll der erwähnte Dichtspalt also auch dort zuverlässig abgedichtet werden können, wo sich im montierten Motor z. B. aufgrund von Fertigungstoleranzen in den Maschinenbauteil-Dichtflächen gegebenenfalls Stufen ergeben können, wobei die Flachdichtung so beschaffen sein soll, daß das Dichtelement schon vom Dichtungshersteller angebracht wird und beim Zusammenbau der die Maschinenbauteile und die Flachdichtung umfassenden Baugruppe nicht der Gefahr einer Beschädigung oder gar eines Abscherens ausgesetzt ist. Insbesondere soll durch die Erfindung eine derartige Zylinderkopfdichtung für einen Motor mit Kettenkasten geschaffen werden, bei dem der Kettenkasten ein Kettenkasten-Oberteil und ein Kettenkasten-Unterteil aufweist, die an der Bildung des durch die Zylinderkopfdichtung abzudichtenden Dichtspalts mitwirken.

Diese Aufgabe läßt sich erfindungsgemäß für eine Flachdichtung mit mindestens zwei Metallblechlagen durch die Maßnahmen gemäß Anspruch 1 lösen, für eine Flachdichtung mit mindestens drei Metallblechlagen durch die Maßnahmen gemäß Anspruch 2.

Bei einer Flachdichtung, bei der die eine der Hauptoberflächen der Dichtungsplatten bildende zweite Metallblechlage im Bereich bzw. in der Nachbarschaft des Dichtelements (in einer Draufsicht auf die Flachdichtung) beispielsweise eine Sicke aufweist, welche in der besagten Hauptoberfläche der Dichtungsplatte eine nach außen vorspringende Stufe oder Wulst bildet, ist die besagte maximale Niveauebene diejenige Ebene, welche parallel zur Ebene der Dichtungsplatte verläuft und auf der Sicke aufliegt; entsprechendes gilt für andere Erhebungen der Oberflächenkontur der genannten ersten Hauptoberfläche der Dichtungsplatte im Bereich bzw. in der Nachbarschaft des Dichtelements. Bei einer erfindungsgemäßen Flachdichtung ist das Dichtelement demnach vor der Gefahr des Abscherens z. B. im Zuge der Montage des Kettenkasten-Oberteils und/oder Kettenkasten-Unterteils geschützt, da das Dichtelement, ehe die Flachdichtung im Dichtspalt zwischen den Maschinenbauteilen eingespannt wird (z. B. durch Anziehen der Zylinderkopfschrauben), keinesfalls über die besagte maximale Niveauebene hinausragt und infolgedessen durch andere Dichtungsteile bzw. durch die Oberflächenkontur der Dichtung vor Beschädigungen geschützt wird.

Ferner kann das Dichtelement schon vom Dichtungshersteller angebracht werden, so daß bei der Montage der Maschinenbauteile an der Flachdichtung selbst keinerlei weitere Arbeiten mehr durchgeführt werden müssen.

Wenn vorstehend davon die Rede war, daß das Material des Dichtelements mindestens bei Betriebstemperatur der Maschinenbauteile und der Flachdichtung zunächst plastisch verformbar sein soll, ist hierunter folgendes zu verstehen: Das zunächst aufgebrachte, noch nicht ausgehärtete Material, aus dem das Dichtelement gebildet wird, soll mindestens so lange zumindest auch und in gewissem Umfang plastisch verformbar sein, bis die Flachdichtung zwischen den gegeneinander abzudichtenden Maschinenbauteilen eingespannt wurde. Dabei kann das Material, aus dem das Dichtelement gebildet wird, schon vor dem Einbau der Dichtung teilweise vernetzt werden, um eine gewisse Formstabilität herbeizuführen, ohne daß dadurch das Dichtelement jegliche Plastizität bzw. jegliche Fähigkeit zum Fließen verliert. Das Material des Dichtelements kann dann z. B. bei Betriebstemperaturen (z. B. des Motors) oder geringeren, gegenüber Raumtemperatur erhöhten Temperaturen vollends so weit aushärten, daß es nur noch elastische, aber keine plastischen Eigenschaften mehr aufweist.

Das Grundprinzip der Erfindung ermöglicht es, die Dichtungsplatte und das Dichtelement so auszubilden, daß ein bei eingebauter Dichtung im Sinne einer Abdichtung wirksamer Abdichtbereich des Dichtelements erst durch Einspannen der Flachdichtung zwischen den Maschinenbauteilen durch die Aussparung der zweiten Metallblechlage hindurchgepreßt und gegen die dieser zweiten Metallblechlage benachbarte Bauteildichtfläche angepreßt wird. Dabei kann das Dichtelement bei noch nicht eingebauter, d. h. ungepreßter Dichtung entweder noch gar nicht in die Aussparung der zweiten Metallblechlage hineinragen oder zwar in diese Aussparung eingreifen oder sogar durch diese Aussparung hindurchgreifen, jedoch zumindest nicht so weit aus dieser Aussparung herausragen, daß der besagte Abdichtbereich des Dichtelements über die vorstehend definierte maximale Niveauebene der ungepreßten Dichtung hinausragt.

Hat die erste Metallblechlage im Bereich des Dichtelements eine Aussparung für einen Eintritt des Dichtelementmaterials in diese Aussparung, kann diese Aussparung der besseren Verankerung des Dichtelements an der ersten Metallblechlage dienen. Benötigt eine erfindungsgemäße Flachdichtung, wie dies häufig bei Zylinderkopfdichtungen der Fall ist, drei oder mehr Metallblechlagen, eröffnet das Grundprinzip der vorliegenden Erfindung mehrere Möglichkeiten auch für den Fall, daß die zu beiden Seiten der Flachdichtung liegenden Bauteil-Dichtflächen beide Stufen oder ähnlich problematisch abzudichtende Unebenheiten aufweisen: Man kann die erste Metallblechlage beidseitig mit Dichtelementen versehen, welche beim Einspannen der Dichtung durch Aussparungen in Außen- oder Decklagen der Dichtung hindurchtreten; alternativ kann bei einer Ausführungsform, bei der auch die erste Metallblechlage im Bereich des Dichtelements eine weitere Aussparung für einen Eintritt des Dichtelementmaterials in diese Aussparung aufweist, die Dichtungsplatte auf der der zweiten Metallblechlage gegenüberliegenden Seite der ersten Metallblechlage eine dritte Metallblechlage aufweisen, welche über der Aussparung der ersten Metallblechlage mit einer weiteren Aussparung für einen Ein- und Durchtritt des Dichtelementmaterials in bzw. durch diese weitere Aussparung versehen ist.

Wie sich aus dem Vorstehenden ergibt, läßt sich mit einer erfindungsgemäßen Flachdichtung das geschilderte Abdichtproblem bei Motoren mit mindestens einem separaten Kettenkastenteil lösen, und zwar mit einer Dichtung gemäß Anspruch 9, bei der die Aussparung der zweiten Metallblechlage zur Überbrückung der Stoßstelle zwischen einem ersten Kettenkastenteil und dem dem letzteren benachbarten Motorbauteil ausgebildet und angeordnet ist (bei dem ersten Kettenkastenteil kann es sich um ein Kettenkasten-Oberteil oder ein Kettenkasten-Unterteil handeln, wobei es sich dann bei dem benachbarten Motorbauteil um den Zylinderkopf bzw. den Motorblock handelt). Besteht das geschilderte Stoßstellenproblem beidseits der Zylinderkopfdichtung, wird eine erfindungsgemäße Zylinderkopfdichtung dann so ausgebildet, daß die vorstehend erwähnte weitere Aussparung (in der ersten oder dritten Metallblechlage) zur Überbrückung der Stoßstelle zwischen dem zweiten Kettenkastenteil und dem dem letzteren benachbarten Motorbauteil ausgebildet und angeordnet ist.

Bei bevorzugten Ausführungsformen einer erfindungsgemäßen Zylinderkopfdichtung für Motoren mit Kettenkasten ist die zweite Metallblechlage im Bereich bzw. in unmittelbarer Nachbarschaft ihrer Aussparung mit einer Sicke (Vollsicke, vorzugsweise jedoch Halbsicke) versehen, welche an der Hauptoberfläche der Dichtungsplatte einen die Aussparung der zweiten Metallblechlage überragenden Vorsprung bildet. Mit einer solchen, natürlich elastisch verformbaren Sicke läßt sich um die Kettenkastenöffnung herum überall dort hinreichend zuverlässig abdichten, wo die Motorbauteil-Dichtflächen keine Stufen aufweisen; außerdem oder alternativ kann die Sicke das Dichtelement bzw. die Dichtelemente gegen Beschädigungen schützen.

Im folgenden wird die Erfindung anhand einer bevorzugten Ausführungsform einer erfindungsgemäßen Zylinderkopfdichtung noch näher erläutert, welche in den beigefügten Zeichnungen dargestellt ist; in diesen zeigen:
- Figur 1: eine Draufsicht auf einen Teil der Zylinderkopfdichtung, welcher zwei Brennraum-Durchgangsöffnungen sowie eine Kettenkastenöffnung der Dichtung umfaßt;
- Figuren 2 - 4: Schnitte nach den Linien 2-2, 3-3 und 4-4 in Figur 1;
- Figur 5: den in Figur 1 angedeuteten Ausschnitt "A" in größerem Maßstab, und
- Figur 6: einen Schnitt nach der Linie 6-6 in Figur 5, wobei in Figur 6 auch Teile eines Motorblocks, eines Zylinderkopfs, eines Kettenkasten-Oberteils und eines Kettenkasten-Unterteils eines zu der Dichtung gehörenden Motors angedeutet wurden.

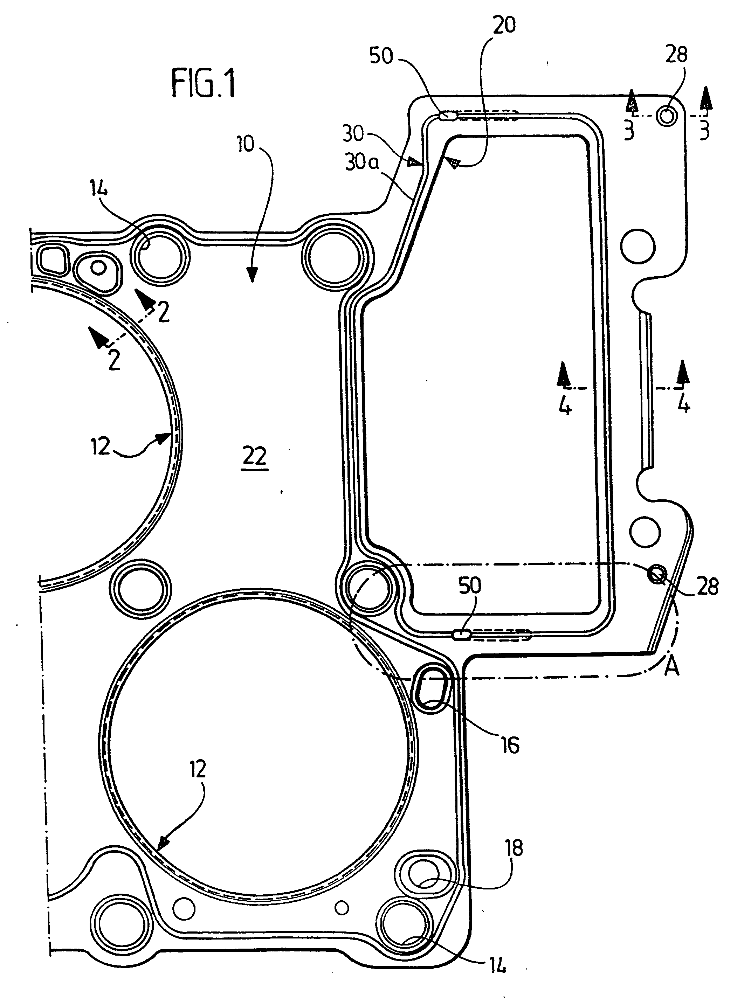

Die in Figur 1 teilweise dargestellte Zylinderkopfdichtung hat eine als Ganzes mit 10 bezeichnete Dichtungsplatte, in der eine Vielzahl von durch die Dichtungsplatte hindurchgehenden Öffnungen ausgebildet sind, so z. B. Brennraumöffnungen 12, Schraubenlöcher 14 für den Durchtritt von Zylinderkopfschrauben, und Wasser- bzw. Öllöcher 16 bzw. 18. Außerdem beinhaltet die Zylinderkopfdichtung eine Kettenkastenöffnung 20, um die herum Dichtflächen eines Kettenkasten-Oberteils und eines angrenzenden Zylinderkopfs sowie eines Kettenkasten-Unterteils und eines angrenzenden Motorblocks durch die Zylinderkopfdichtung gegeneinander abzudichten sind.

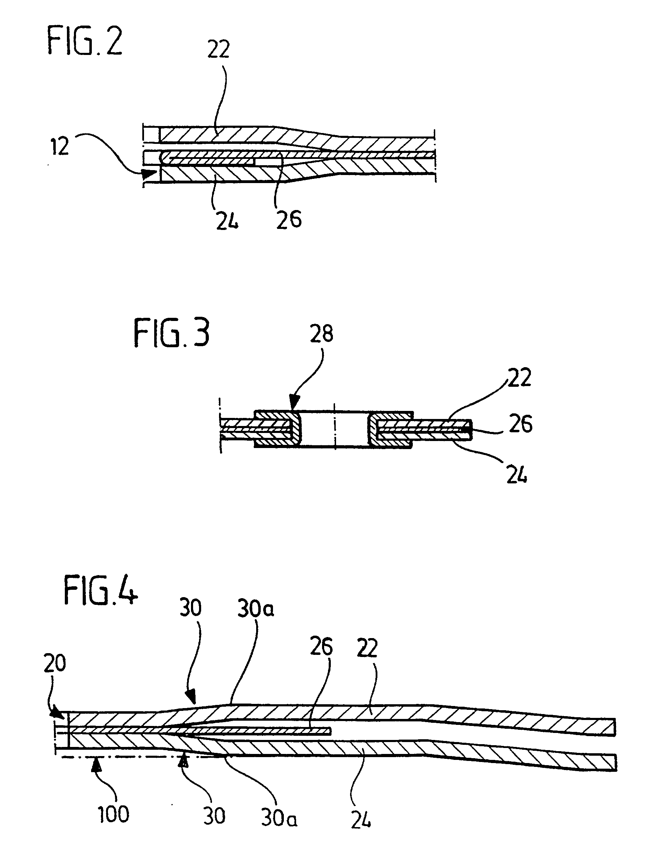

Wie z. B. die Figur 2 erkennen läßt, ist die Dichtungsplatte 10 dreilagig und umfaßt zwei mit Sicken versehene Außen- oder Decklagen 22 und 24 aus elastische Eigenschaften aufweisenden Stahlblechen sowie eine metallische Mittellage 26, welche um die Brennraumöffnungen 12 herum auf sich selbst zurückgefaltet wurde und deshalb üblicherweise als Bördelblechlage bezeichnet wird. An mehreren, dem Rand der Dichtungsplatte 10 benachbarten Stellen sind die drei Metallblechlagen 22, 24 und 26 durch Hohlniete 28 miteinander verbunden, so wie dies in Figur 3 näher dargestellt wurde.

Um die Kettenkastenöffnung 20 herum verläuft sowohl in der Außenlage 22, als auch in der Außenlage 24 jeweils eine Halbsicke 30 (siehe auch Figur 4), welche eine in sich geschlossene Sickenlinie bildet und deren Kamm mit 30a bezeichnet wurde.

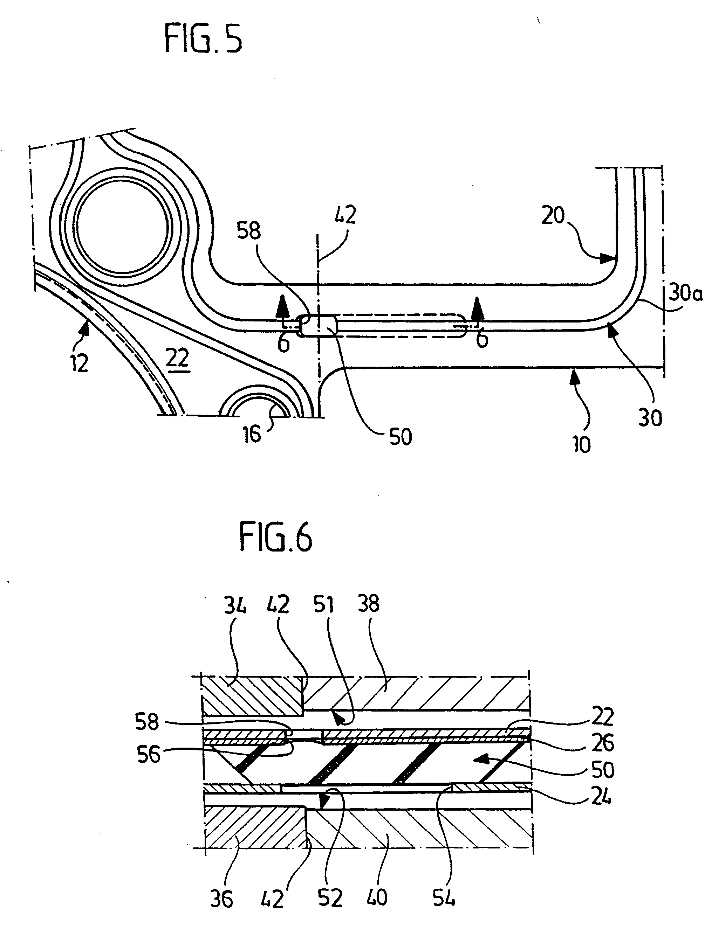

In Figur 6 sind die für die vorliegende Erfindung relevanten Motorbauteile angedeutet, wenn auch nur bereichsweise, nämlich ein Zylinderkopf 34, ein Motorblock 36, ein Kettenkasten-Oberteil 38 und ein Kettenkasten-Unterteil 40; die Stoßstellen, an denen der Zylinderkopf und das Kettenkasten-Oberteil bzw. der Motorblock und das Kettenkasten-Unterteil aneinandergrenzen (stumpf gegeneinander stoßen), wurden beide mit 42 bezeichnet, da bei der dargestellten Ausführungsform die beiden Stoß- oder Trennstellen exakt übereinanderliegen, weshalb sie in Figur 5 auch nur durch eine einzige strichpunktierte Linie angedeutet wurden.

Während im praktisch nur schwer realisierbaren Idealfall Zylinderkopf und Kettenkasten-Oberteil bzw. Motorblock und Kettenkasten-Unterteil durchgehende, ebene Dichtflächen bilden, zwischen denen die Zylinderkopfdichtung eingespannt wird, führen Fertigungs- und Montagetoleranzen oft dazu, daß die in Figur 6 mit 51 bzw. 52 bezeichneten Dichtflächen an den Stoßstellen 42 eine kleine Stufe bilden. Dabei ist die Stufe in der Dichtfläche 52 in der Regel deutlich größer bzw. höher als eine in der Dichtfläche 51 gegebenenfalls vorhandene Stufe, da die Montage des Kettenkasten-Oberteils 38 oft auf Paßstiften und damit sehr genau erfolgt. So kann die Dichtfläche 52 im Bereich des Kettenkasten-Unterteils 40 um 0,2 ± 0,2 mm, d. h. bis zu 0,4 mm, tiefer liegen als im Bereich des Motorblocks 36, weshalb man erfindungsgemäß auch die Höhe der von der Halbsicke 30 der unteren Außenlage 24 gebildeten "Stufe" deutlich größer wählt (z. B. 0,45 mm) als die Höhe der von der Halbsicke 30 der oberen Außenlage 22 gebildete "Stufe" (z. B. 0,25 mm).

Gegenstand der vorliegenden Erfindung sind nun zwei im wesentlichen strang- oder raupenförmige Dichtelemente 50, welche zu beiden Seiten der Kettenkastenöffnung 20 angeordnet sind, und zwar neben den Schmalseiten der Kettenkastenöffnung, und die - in einer Draufsicht auf die Dichtung - unterhalb und zwischen den Halbsicken 30 bzw. Sickenkämmen 30a liegen. Erfindungsgemäß werden zur Erzeugung der Dichtelemente 50 auf die Motorblock-seitige Oberfläche der Mittellage 26 zwei in ihrer Länge der Länge der Dichtelemente 50 entsprechende Raupen aus einem zunächst pastösen Dichtungsmaterial aufgetragen, welches sich insbesondere durch Erwärmen so verfestigen läßt, daß es zunächst außer elastischen auch noch plastische Eigenschaften und sodann nur noch elastische Eigenschaften aufweist. Wie sich der Figur 6 in Verbindung mit den Figuren 1 und 5 entnehmen läßt, weist die untere Außenlage 24 unter jedem Dichtelement 50 eine fensterartige Aussparung 54 auf, deren Gestalt einem Langloch bzw. einem langen, schmalen Rechteck entspricht, welches sich in Längsrichtung des benachbarten Dichtelements 50 erstreckt. Ferner haben die Mittellage 26 und die obere Außenlage 22 über jedem Dichtelement 50 jeweils eine weitere Aussparung 56 bzw. 58, wobei diese beiden gleichfalls fensterartigen Aussparungen vorzugsweise deckungsgleich übereinanderliegen und die Gestalt eines deutlich kürzeren Langlochs (im Vergleich zur Aussparung 54) besitzen. So haben bei einer bevorzugten Ausführungsform die Aussparungen 54, 56 und 58 die folgenden Abmessungen:
Aussparung 54: 3 x 23 mm.
Aussparungen 56, 58: 3 x 5 mm

Die Dichtelemente 50 sind erfindungsgemäß um ein Vielfaches höher (gemäß Figur 6 vertikale Abmessung) als die Außenlagen 22 und 24 dick sind - bei einer bevorzugten Ausführungsform beträgt die Höhe der Dichtelemente 50 0,7 bis 0,9 mm, während die Blechstärke der Außenlagen 22 und 24 0,20 bis 0,25 mm beträgt.

Beim Auftragen des später die Dichtelemente 50 bildenden Dichtungsmaterials auf die Mittellage 26 kann das Dichtungsmaterial in die Aussparung 56 der Mittellage eintreten, so wie dies in Figur 6 angedeutet wurde. Bei bevorzugten Ausführungsformen der Erfindung greifen die Dichtelemente 50 bei ungepreßter Dichtung jedoch noch nicht in die Aussparungen 54 und 58 ein, da bei diesen Ausführungsformen zumindest die Lagen 24 und 26 der Dichtungsplatte 10 einen Abstand voneinander aufweisen, solange die Dichtung nicht eingespannt, d. h. noch nicht gepreßt ist. Erfindungsgemäß tritt das Material der Dichtelemente 50 erst beim Einbauen der Dichtung und beim Einspannen der Dichtung zwischen den Maschinenbauteil-Dichtflächen in die Aussparungen 54 und 58 ein und durch diese Aussparungen hindurch, so daß es über die beiden Hauptoberflächen der Dichtungsplatte 10 übersteht und gegen die Dichtflächen 51 und 52 angepreßt wird, und zwar gerade im Bereich der Stoßstellen 42. Dabei bildet das Dichtungsmaterial auf der Außenseite der Dichtungsplatte über der Aussparung 54 eine längliche, elastomere Rippe, welche gegen die Dichtfläche 52 angepreßt wird, während dank der geringen Unebenheiten der Dichtfläche 51 auf der Oberseite (gemäß Figur 6) der Dichtung ein kurzer, aus der Aussparung 58 austretender elastomerer Bereich der Dichtelemente 50 für eine zuverlässige Abdichtung ausreichend ist.

Beim Hersteller der Flachdichtung ist es ohne weiteres möglich, zur Herstellung der Dichtelemente 50 Dichtungsmaterial-Raupen auf die Mittellage 26 aufzutragen, und zwar hinsichtlich der Länge, der Breite und des Volumens dieser Raupen derart gesteuert, daß sich exakt die gewünschten Dichtelemente 50 ergeben. Selbstverständlich werden die Dichtungsmaterial-Raupen auf die Metallblechlage 26 aufgebracht, ehe die Lagen 22, 24, 26 zu der Dichtungsplatte 10 zusammengesetzt werden.

Zur Vervollständigung sei noch erwähnt, daß die vorstehend definierte maximale Niveauebene in die Figur 4 als strichpunktierte Linie 100 eingezeichnet wurde; bei der dargestellten Ausführungsform verläuft diese Niveauebene parallel zur Ebene der Dichtungsplatte 10 als Tangentialebene an den Sickenkamm 30a der Außenlage 24.

## Patentansprüche

1. Flachdichtung zur Abdichtung eines Dichtspalts zwischen gegen die Flachdichtung anpreßbaren Dichtflächen (51, 52) von Maschinenbauteilen (34, 36, 38, 40), wobei die Flachdichtung eine von wenigstens zwei Metallblechlagen (22, 24, 26) gebildete Dichtungsplatte (10) aufweist, welche in einem Dichtungsplattenbereich, der der Abdichtung eines Dichtspaltbereichs dient, in dem die Bauteildichtflächen an der Flachdichtung zu einer räumlich unterschiedlichen Dichtflächenpressung führen, mit mindestens einem elastomeren Dichtelement (50) versehen ist, welches an einer ersten (26) der Metallblechlagen angeordnet ist und sich bei eingebauter Flachdichtung durch eine erste Aussparung (54) in der zweiten, eine erste der Hauptoberflächen der Dichtungsplatte bildenden Metallblechlage (24) hindurch bis zu der der letzteren benachbarten Bauteildichtfläche (52) erstreckt, und wobei bei nicht eingebauter, ungepreßter Flachdichtung die Oberflächenkontur der zweiten Metallblechlage (24) an dieser ersten Hauptoberfläche der Dichtungsplatte eine zur Dichtungsplattenebene parallele maximale Niveauebene (100) definiert, **gekennzeichnet durch** die Kombination folgender Merkmale:
(a) das Dichtelement (50) ist als aus einem auf die erste Metallblechlage (26) aufgebrachten und in situ aushärtbarem Material gebildetes Dichtelement gestaltet;
(b) das Material des Dichtelements (50) ist mindestens bei Betriebstemperatur der Maschinenbauteile und der Flachdichtung zunächst plastisch verformbar;
(c) die Dichtungsplatte (10) und das Dichtelement (50) sind so ausgebildet, daß sich das Dichtelement bei nicht eingebauter, ungepreßter Flachdichtung höchstens bis zu der maximalen Niveauebene (100) erstreckt;
(d) die erste Metallblechlage (26) weist im Bereich des Dichtelements (50) eine zweite Aussparung (56) für den Durchtritt des Dichtelementmaterials zur zweiten Hauptoberfläche der Dichtungsplatte (10) auf.

2. Flachdichtung zur Abdichtung eines Dichtspalts zwischen gegen die Flachdichtung anpreßbaren Dichtflächen von Maschinenbauteilen, wobei die Flachdichtung eine von wenigstens drei Metallblechlagen gebildete Dichtungsplatte aufweist, welche in einem Dichtungsplattenbereich, der der Abdichtung eines Dichtspaltbereichs dient, in dem die Bauteildichtflächen an der Flachdichtung zu einer räumlich unterschiedlichen Dichtflächenpressung führen, mit mindestens einem elastomeren Dichtelement versehen ist, welches an einer ersten der Metallblechlagen angeordnet ist und sich bei eingebauter Flachdichtung durch eine Aussparung in der zweiten, eine erste der Hauptoberflächen der Dichtungsplatte bildenden Metallblechlage hindurch bis zu der der letzteren benachbarten Bauteildichtfläche erstreckt, und wobei bei nicht eingebauter, ungepreßter Flachdichtung die Oberflächenkontur der zweiten Metallblechlage an dieser ersten Hauptoberfläche der Dichtungsplatte eine zur Dichtungsplattenebene parallele maximale Niveauebene definiert, **gekennzeichnet durch** die Kombination folgender Merkmale:
(a) auf jede Seite der ersten Metallblechlage ist ein Dichtelement aus einem in situ aushärtbaren Material aufgebracht;
(b) das Material der Dichtelemente ist mindestens bei Betriebstemperatur der Maschinenbauteile und der Flachdichtung zunächst plastisch verformbar;
(c) die Dichtungsplatte und das der zweiten Metallblechlage zugewandte Dichtelement sind so ausgebildet, daß sich dieses Dichtelement bei nicht eingebauter, ungepreßter Flachdichtung höchstens bis zu der maximalen Niveauebene erstreckt;
(d) die dritte Metallblechlage weist im Bereich des anderen Dichtelements eine weitere Aussparung für den Durchtritt des Materials dieses Dichtelements zur zweiten Hauptoberfläche der Dichtungsplatte auf.

3. Flachdichtung nach Anspruch 1 oder 2, **dadurch gekennzeichnet, daß** die Dichtungsplatte (10) und das Dichtelement (50) so ausgebildet sind, daß ein Abdichtbereich des Dichtelements durch Einspannen der Flachdichtung zwischen den Maschinenbauteilen durch die Aussparung (54) der zweiten Metallblechlage (24) hindurchpreßbar und gegen die der letzteren benachbarte Bauteildichtfläche (52) anpreßbar ist.

4. Flachdichtung nach Anspruch 2, **dadurch gekennzeichnet, daß** die Dichtungsplatte und das Dichtelement so ausgebildet sind, daß ein Abdichtbereich des Dichtelements durch Einspannen der Flachdichtung zwischen den Maschinenbauteilen durch die Aussparung der dritten Metallblechlage hindurchpreßbar und gegen die der letzteren benachbarte Bauteildichtfläche anpreßbar ist.

5. Flachdichtung nach Anspruch 1 oder 2, **dadurch gekennzeichnet, daß** das Dichtelement (50) bei ungepreßter Flachdichtung nicht in die Aussparung (54) der zweiten Metallblechlage (24) eingreift.

6. Flachdichtung nach einem der vorstehenden Ansprüche, **dadurch gekennzeichnet, daß** das Material des Dichtelements (50) unter gegenüber Raumtemperatur erhöhten Temperaturen aushärtbar ist.

7. Flachdichtung nach Anspruch 6, **dadurch gekennzeichnet, daß** bei noch nicht eingebauter Flachdichtung das Material des Dichtelements (50) noch nicht ausgehärtet ist.

8. Flachdichtung nach Anspruch 1, **dadurch gekennzeichnet, daß** die Dichtungsplatte (10) auf der der zweiten Metallblechlage (24) gegenüberliegenden Seite der ersten Metallblechlage (26) eine dritte Metallblechlage (22) aufweist, welche über der Aussparung (56) der ersten Metallblechlage mit einer weiteren Aussparung (58) für einen Ein- und Durchtritt des Dichtelementmaterials in/durch diese weitere Aussparung versehen ist.

9. Flachdichtung nach einem der vorstehenden Ansprüche, wobei die Maschinenbauteile einen Zylinderkopf (34), einen Motorblock (36), ein dem Zylinderkopf benachbartes Kettenkasten-Oberteil (38) und ein dem Motorblock benachbartes Kettenkasten-Unterteil (40) sind, die eine Bauteildichtfläche (51) von dem Zylinderkopf sowie dem Kettenkasten-Oberteil, die andere Bauteildichtfläche (52) von dem Motorblock sowie dem Kettenkasten-Unterteil gebildet wird und die Flachdichtung als Zylinderkopfdichtung mit einem Kettenkasten-Abdichtbereich ausgebildet ist, **dadurch gekennzeichnet, daß** die Aussparungen zur Überbrückung der Stoßstellen zwischen den Kettenkastenteilen, dem Motorblock und dem Zylinderkopf ausgebildet und angeordnet sind.

10. Flachdichtung nach Anspruch 1, **dadurch gekennzeichnet, daß** das Dichtelement (50) als auf die erste Metallblechlage (26) aufgetragene längliche Raupe aus einem elastomeren Material ausgebildet und die Aussparung (54) der zweiten Metallblechlage (24) als über dieser Raupe liegendes längliches Fenster gestaltet ist.

11. Flachdichtung nach den Ansprüchen 8 und 10, **dadurch gekennzeichnet, daß** die weitere Aussparung (56, 58) als über der Raupe liegende Öffnung gestaltet ist.

12. Flachdichtung nach den Ansprüchen 10 und 11, **dadurch gekennzeichnet, daß** die Öffnung (56, 58) in Längsrichtung der Raupe kürzer ist als das Fenster (54).

13. Flachdichtung nach einem der vorstehenden Ansprüche, **dadurch gekennzeichnet, daß** die zweite Metallblechlage (24) im Bereich ihrer Aussparung (54) mit einer Sicke (30) versehen ist, welche an der ersten Hauptoberfläche der Dichtungsplatte (10) einen die Aussparung überragenden Vorsprung bildet.

14. Flachdichtung nach Anspruch 13, **dadurch gekennzeichnet, daß** die Sicke (30) als Halbsicke ausgebildet ist.

15. Flachdichtung nach Anspruch 13 oder 14, **dadurch gekennzeichnet, daß** die Sicke (30) eine um eine Kettenkastenöffnung (20) der Flachdichtung herum verlaufende, in sich geschlossene Sickenlinie bildet.

16. Flachdichtung nach einem oder mehreren der Ansprüche 13 bis 15, **dadurch gekennzeichnet, daß** - in einer Draufsicht auf die Flachdichtung - der Kamm (30a) der Sicke (30) über dem Dichtelement (50) liegt.

## Claims

1. Flat gasket for sealing a sealing gap between sealing surfaces (51, 52) of machine components (34, 36, 38, 40), said sealing surfaces being pressable against said flat gasket, said flat gasket comprising a gasket plate (10) formed by at least two sheet metal layers (22, 24, 26), said gasket plate being provided with at least one elastomeric sealing element (50) in a gasket plate area serving to seal a sealing gap area in which the component sealing surfaces lead to a locally varying sealing surface pressure at the flat gasket, said sealing element being arranged on a first one (26) of the sheet metal layers and, in the mounted state of the flat gasket, extending through a first cutout (54) in the second sheet metal layer (24) forming a first one of the main surfaces of the gasket plate as far as the component sealing surface (52) adjacent to the second sheet metal layer, and the surface contour of the second sheet metal layer (24) defining at this first main surface of the gasket plate a plane (100) of the maximum level of said surface contour parallel to the plane of the gasket plate in the unmounted, unpressed state of the flat gasket, **characterized by** the combination of the following features:
(a) the sealing element (50) is in the form of a sealing element formed from a material which is applied to the first sheet metal layer (26) and is curable in situ;
(b) the material of the sealing element (50) is initially capable of undergoing plastic deformation at least at operating temperature of the machine components and the flat gasket;
(c) the gasket plate (10) and the sealing element (50) are so designed that in the unmounted, unpressed state of the flat gasket, the sealing element extends at the most as far as said plane (100) of the maximum level;
(d) the first sheet metal layer (26) has in the area of the sealing element (50) a second cutout (56) for passage of the sealing element material therethrough to the second main surface of the gasket plate (10).

2. Flat gasket for sealing a sealing gap between sealing surfaces of machine components, said sealing surfaces being pressable against said flat gasket, said flat gasket comprising a gasket plate formed by at least three sheet metal layers, said gasket plate being provided with at least one elastomeric sealing element in a gasket plate area serving to seal a sealing gap area in which the component sealing surfaces lead to a locally varying sealing surface pressure at the flat gasket, said sealing element being arranged on a first one of the sheet metal layers and, in the mounted state of the flat gasket, extending through a cutout in the second sheet metal layer forming a first one of the main surfaces of the gasket plate as far as the component sealing surface adjacent to the second sheet metal layer, and the surface contour of the second sheet metal layer defining at this first main surface of the gasket plate a plane of the maximum level of said surface contour parallel to the plane of the gasket plate in the unmounted, unpressed state of the flat gasket, **characterized by** the combination of the following features:
(a) a sealing element formed from a material which is curable in situ is applied to each side of the first sheet metal layer;
(b) the material of the sealing elements is initially capable of undergoing plastic deformation at least at operating temperature of the machine components and the flat gasket;
(c) the gasket plate and the sealing element facing the second sheet metal layer are so designed that in the unmounted, unpressed state of the flat gasket, this sealing element extends at the most as far as said plane of the maximum level;
(d) the third sheet metal layer has in the area of the other sealing element a further cutout for passage of the material of this sealing element therethrough to the second main surface of the gasket plate.

3. Flat gasket as defined in claim 1 or 2, **characterized in that** the gasket plate (10) and the sealing element (50) are so designed that a sealing portion of the sealing element is pressable through the cutout (54) of the second sheet metal layer (24) and pressable against the component sealing surface (52) adjacent to the second sheet metal layer by clamping the flat gasket between the machine components.

4. Flat gasket as defined in claim 2, **characterized in that** the gasket plate and the sealing element are so designed that a sealing portion of the sealing element is pressable through the cutout of the third sheet metal layer and pressable against the component sealing surface adjacent to the third sheet metal layer by clamping the flat gasket between the machine components.

5. Flat gasket as defined in claim 1 or 2, **characterized in that** in the unpressed state of the flat gasket, the sealing element (50) does not engage in the cutout (54) of the second sheet metal layer (24).

6. Flat gasket as defined in any one of the preceding claims,
**characterized in that** the material of the sealing element (50) is curable at elevated temperatures with respect to room temperature.

7. Flat gasket as defined in claim 6, **characterized in that** the material of the sealing element (50) is not yet cured so long as the flat gasket is not yet mounted.

8. Flat gasket as defined in claim 1, **characterized in that** the gasket plate (10) has on the side of the first sheet metal layer (26) located opposite the second sheet metal layer (24) a third sheet metal layer (22) having over the cutout (56) of the first sheet metal layer a further cutout (58) for entry and passage of the sealing element material into/through this further cutout.

9. Flat gasket as defined in any one of the preceding claims, the machine components being a cylinder head (34), an engine block (36), a chain case top part (38) adjacent to the cylinder head and a chain case bottom part (40) adjacent to the engine block, one component sealing surface (51) being formed by the cylinder head and the chain case top part, and the other component sealing surface (52) by the engine block and the chain case bottom part, and the flat gasket being designed as a cylinder head gasket with a chain case sealing area, **characterized in that** the cutouts are designed and arranged so as to bridge the joints between the first chain case parts, the engine block and the cylinder head.

10. Flat gasket as defined in claim 1, **characterized in that** the sealing element (50) is in the form of an elongate strand of elastomeric material applied to the first sheet metal layer (26), and the cutout (54) of the second sheet metal layer (24) is designed as an elongate window lying over this strand.

11. Flat gasket as defined in claims 8 and 10, **characterized in that** the further cutout (56, 58) is in the form of an opening lying over the strand.

12. Flat gasket as defined in claims 10 and 11, **characterized in that** the opening (56, 58) is shorter than the window (54) in the longitudinal direction of the strand.

13. Flat gasket as defined in any one of the preceding claims,
**characterized in that** the second sheet metal layer (24) is provided in the area of its cutout (54) with a bead (30) which forms on the first main surface of the gasket plate (10) a projection rising above the cutout.

14. Flat gasket as defined in claim 13, **characterized in that** the bead (30) is in the form of a half bead.

15. Flat gasket as defined in claim 13 or 14, **characterized in that** the bead (30) forms a bead line closed within itself, which extends around a chain case opening (20) of the flat gasket.

16. Flat gasket as defined in any one or several of claims 13 to 15,
**characterized in that** - in a plan view of the flat gasket - the crest (30a) of the bead (30) lies over the sealing element (50).

## Revendications

1. Joint plat d'étanchéité permettant d'assurer l'étanchéité d'un intervalle d'étanchéité compris entre des surfaces d'étanchéité (51, 52) de pièces de machines (34, 36, 38, 40) pouvant venir en appui contre le joint plat d'étanchéité, où le joint plat d'étanchéité présente une plaque d'étanchéité (10) formée par au moins deux couches de tôle métallique (22, 24, 26), laquelle plaque d'étanchéité, dans une zone de la plaque d'étanchéité qui sert à assurer l'étanchéité d'une zone de l'intervalle d'étanchéité, zone dans laquelle les surfaces d'étanchéité de la pièce, en appui sur le joint plat d'étanchéité, entraînent une pression différenciée, dans l'espace, des surfaces d'étanchéité, est dotée d'au moins un élément d'étanchéité élastomère (50) qui est disposé sur une première (26) des couches de tôle métallique et, lorsque le joint plat d'étanchéité est positionné, s'étend à travers un premier évidement (54) formé dans la deuxième couche de tôle métallique (24) formant une première des surfaces principales de la plaque d'étanchéité, jusqu'à la surface d'étanchéité de la pièce (52) adjacente à cette deuxième couche de tôle métallique, et où, dans le cas d'un joint plat d'étanchéité non positionné et non comprimé, le contour de surface de la deuxième couche de tôle métallique (24) définit, sur cette première surface principale de la plaque d'étanchéité, un niveau de plan maximum (100) parallèle au plan de la plaque d'étanchéité,
**caractérisé par** la combinaison de caractéristiques suivantes :
(a) l'élément d'étanchéité (50) est conçu comme un élément d'étanchéité appliqué sur la première couche de tôle métallique (26) et formé d'un matériau durcissable in situ ;
(b) le matériau de l'élément d'étanchéité (50) est d'abord plastiquement déformable au moins à la température de fonctionnement des pièces de la machine et du joint plat d'étanchéité ;
(c) la plaque d'étanchéité (10) et l'élément d'étanchéité (50) sont conçus de manière telle, que l'élément d'étanchéité, lorsque le joint plat d'étanchéité est non positionné et non comprimé, s'étende tout au plus jusqu'au plan de niveau maximum (100) ;
(d) la première couche de tôle métallique (26) présente, dans la zone de l'élément d'étanchéité (50), un second évidement (56) pour la pénétration du matériau de l'élément d'étanchéité, par rapport à la seconde surface principale de la plaque d'étanchéité (10).

2. Joint plat d'étanchéité permettant d'assurer l'étanchéité d'un intervalle d'étanchéité compris entre des surfaces d'étanchéité de pièces de machines pouvant venir en appui contre le joint plat d'étanchéité, où le joint plat d'étanchéité présente une plaque d'étanchéité formée par au moins trois couches de tôle métallique, laquelle plaque d'étanchéité, dans une zone de la plaque d'étanchéité qui sert à assurer l'étanchéité d'une zone de l'intervalle d'étanchéité, zone dans laquelle les surfaces d'étanchéité de la pièce, en appui sur le joint plat d'étanchéité, entraînent une pression différenciée, dans l'espace, des surfaces d'étanchéité, est dotée d'au moins un élément d'étanchéité élastomère qui est disposé sur une première des couches de tôle métallique et, lorsque le joint plat d'étanchéité est positionné, s'étend à travers un évidement formé dans la deuxième couche de tôle métallique formant une première des surfaces principales de la plaque d'étanchéité, jusqu'à la surface d'étanchéité de la pièce adjacente à cette deuxième couche de tôle métallique, et où, dans le cas d'un joint plat d'étanchéité non positionné et non comprimé, le contour de surface de la deuxième couche de tôle métallique définit, sur cette première surface principale de la plaque d'étanchéité, un niveau de plan maximum parallèle au plan de la plaque d'étanchéité,
**caractérisé par** la combinaison de caractéristiques suivantes :
(a) un élément d'étanchéité constitué d'un matériau durcissable in situ est appliqué sur chaque face de la première couche de tôle métallique ;
(b) le matériau des éléments d'étanchéité est d'abord plastiquement déformable au moins à la température de fonctionnement des pièces de la machine et du joint plat d'étanchéité ;
(c) la plaque d'étanchéité et l'élément d'étanchéité tourné vers la deuxième couche de tôle métallique sont conçus de manière telle, que cet élément d'étanchéité, lorsque le joint plat d'étanchéité est non positionné et non comprimé, s'étende tout au plus jusqu'au plan de niveau maximum ;
(d) la troisième couche de tôle métallique présente, dans la zone de l'autre élément d'étanchéité, un autre évidement pour la pénétration du matériau de cet élément d'étanchéité, par rapport à la seconde surface principale de la plaque d'étanchéité.

3. Joint plat d'étanchéité selon la revendication 1 ou 2, **caractérisé en ce que** la plaque d'étanchéité (10) et l'élément d'étanchéité (50) sont conçus de manière telle, qu'une zone d'étanchéité de l'élément d'étanchéité puisse être comprimée en insérant le joint plat d'étanchéité entre les pièces de la machine, à travers l'évidement (54) de la deuxième couche de tôle métallique (24) et puisse venir en appui contre la surface d'étanchéité de la pièce (52) adjacente à cette deuxième couche de tôle métallique.

4. Joint plat d'étanchéité selon la revendication 2, **caractérisé en ce que** la plaque d'étanchéité et l'élément d'étanchéité sont conçus de manière telle, qu'une zone d'étanchéité de l'élément d'étanchéité puisse être comprimée en insérant le joint plat d'étanchéité entre les pièces de la machine, à travers l'évidement de la troisième couche de tôle métallique et puisse venir en appui contre la surface d'étanchéité de la pièce adjacente à cette troisième couche de tôle métallique.

5. Joint plat d'étanchéité selon la revendication 1 ou 2, **caractérisé en ce que** l'élément d'étanchéité (50), lorsque le joint plat d'étanchéité est non comprimé, ne s'engage pas dans l'évidement (54) de la deuxième couche de tôle métallique (24).

6. Joint plat d'étanchéité selon l'une quelconque des revendications précédentes, **caractérisé en ce que** le matériau de l'élément d'étanchéité (50) est durcissable à des températures élevées par rapport à la température ambiante.

7. Joint plat d'étanchéité selon la revendication 6, **caractérisé en ce que**, lorsque le joint plat d'étanchéité est non positionné, le matériau de l'élément d'étanchéité (50) n'est pas encore durci.

8. Joint plat d'étanchéité selon la revendication 1, **caractérisé en ce que** la plaque d'étanchéité (10) présente, sur la face de la première couche de tôle métallique (26) placée en vis-à-vis de la deuxième couche de tôle métallique (24), une troisième couche de tôle métallique (22) qui, au-dessus de l'évidement (56) de la première couche de tôle métallique, est dotée d'un autre évidement (58) pour une entrée et une pénétration du matériau de l'élément d'étanchéité dans et à travers cet autre évidement.

9. Joint plat d'étanchéité selon l'une quelconque des revendications précédentes, où les pièces de la machine sont une tête de cylindre (34), un bloc-moteur (36), une partie supérieure de carter de chaîne (38) adjacente à la tête de cylindre et une partie inférieure de carter de chaîne (40) adjacente au bloc-moteur, l'une des surfaces d'étanchéité de la pièce (51) est formée par la tête de cylindre ainsi que par la partie supérieure du carter de chaîne, l'autre surface d'étanchéité de la pièce (52) est formée par le bloc-moteur ainsi que par la partie inférieure du carter de chaîne, et le joint plat d'étanchéité est conçu comme un joint d'étanchéité de la tête de cylindre comprenant une zone d'étanchéité du carter de chaîne,
**caractérisé en ce que** les évidements sont conformés et disposés pour combler l'espace existant entre les emplacements de joint des parties du carter de chaîne, du bloc-moteur et de la tête de cylindre.

10. Joint plat d'étanchéité selon la revendication 1, **caractérisé en ce que** l'élément d'étanchéité (50) est conçu comme un cordon de soudure allongé, appliqué sur la première couche de tôle métallique (26) et constitué d'un matériau élastomère, et l'évidement (54) de la deuxième couche de tôle métallique (24) est configuré comme une fenêtre allongée se trouvant au-dessus de ce cordon de soudure.

11. Joint plat d'étanchéité selon les revendications 8 et 10, **caractérisé en ce que** l'autre évidement (56, 58) est conformé comme une ouverture se trouvant au-dessus du cordon de soudure.

12. Joint plat d'étanchéité selon les revendications 10 et 11, **caractérisé en ce que** l'ouverture (56, 58) est, dans le sens longitudinal du cordon de soudure, plus courte que la fenêtre (54).

13. Joint plat d'étanchéité selon l'une quelconque des revendications précédentes, **caractérisé en ce que** la deuxième couche de tôle métallique (24) est dotée, dans la zone de son évidement (54), d'une moulure (30) qui forme, sur la première surface principale de la plaque d'étanchéité (10), une partie saillante dépassant de l'évidement.

14. Joint plat d'étanchéité selon la revendication 13, **caractérisé en ce que** la moulure (30) est conformée comme une demi-moulure.

15. Joint plat d'étanchéité selon la revendication 13 ou 14, **caractérisé en ce que** la moulure (30) forme une ligne de moulure, en soi fermée, s'étendant de façon circulaire autour d'une ouverture de carter de chaîne (20) du joint plat d'étanchéité.

16. Joint plat d'étanchéité selon l'une quelconque ou plusieurs des revendications 13 à 15, **caractérisé en ce que**, dans une vue de dessus du joint plat d'étanchéité, la crête (30a) de la moulure (30) se trouve au-dessus de l'élément d'étanchéité (50).
